# EUROPEAN PATENT APPLICATION

(11) **EP 1 647 654 A1**
(43) Date of publication of application: **19.04.2006**
(21) Application number: 05007495.4
(22) Date of filing: 06.04.2005
(51) Int. Cl.: E05C 17/24

(54) **Opening angle regulation device of side door for heavy equipment**

(30) Priority: 14.10.2004 KR 2004082274
(71) Applicant: Volvo Construction Equipment Holding Sweden AB, 631 85 Eskilstuna (SE)
(72) Inventor: Shin, Han Chul, Changwon (KR)
(74) Representative: Dr. Weitzel & Partner

(57) **Abstract**

Disclosed is an opening angle regulating device of a side door for a heavy equipment, which is provided between a door frame and the side door to regulate an opening angle of the side door. The opening angle regulating device includes a rod whose one end is rotatably fixed onto the door frame, and a bracket fixed onto the side door, having a guide rail slidably fixed to the other end of the rod depending on opening and closure of the side door, the guide rail having a groove that fixes the other end of the rod if the side door is opened at a predetermined angle. Preferably, the opening angle of the side door is regulated as the position of the groove is adjusted on the guide rail.

## Description

### BACKGROUND OF THE INVENTION

### Field of the Invention

The present invention relates to an opening angle regulating device of a side door for a heavy equipment, and more particularly to, an opening angle regulating device of a side door for a heavy equipment, which is provided between a door frame and the side door to fix or regulate the opening angle of the side door against the door frame.

### Description of the Related Art

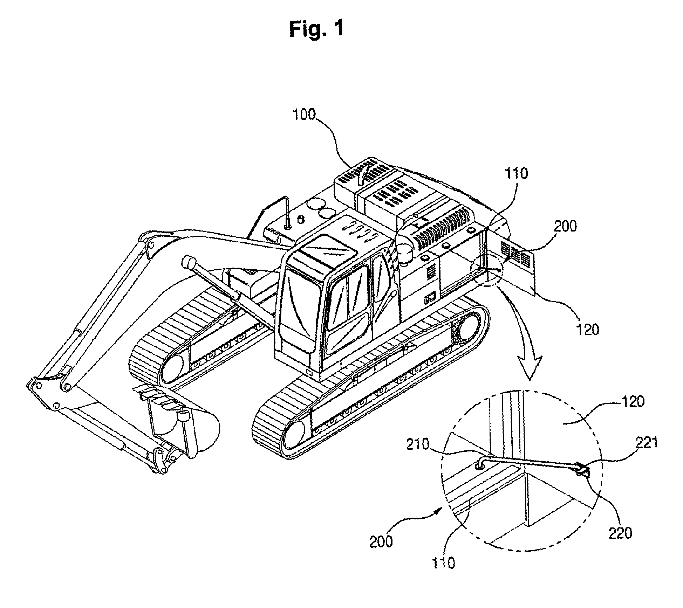

Generally, a heavy equipment such as an excavator and a loader is provided with a door frame at a side of a driving room (cab). A side door is hinged on the door frame to open and close. A predetermined device is provided between the door frame and the side door to fix or regulate an opening angle of the side door against the door frame. As an example of the device, an opening angle regulating device 200 of a side door for a heavy equipment according to the related art is shown in FIG. 1.

As shown in FIG. 1, the opening angle regulating device 200 includes a rod 210 whose one end is rotatably fixed onto a door frame 110 of a heavy equipment 100, and a bracket 220 fixed to a rear side of a side door 120, having an insertion hole 221. The other end of the rod is selectively inserted into the hole 221 depending on opening and closure of the side door 120.

However, in the aforementioned opening angle regulating device 200, since the side door 120 is hinged on the door frame 110, it may collide with other elements if it is opened beyond the necessary range, thereby causing damage of the front side.

Also, to fix the opening angle of the side door 120, the other end of the rod 210 fixed onto the door frame 110 should artificially be inserted into the insertion hole 221 of the bracket 220 in a state that the side door 120 is opened at a predetermined angle. To close the side door 120, after the other end of the rod 120 is lifted to be detached from the hole 221, it is to be rotated in a closure direction. In this case, a problem occurs in that it is inconvenient to open and close the side door 120.

Moreover, if the other end of the rod 120 is not inserted into the hole 221 of the bracket 220 in a state that the side door 120 is opened, the side door 120 may forcibly be closed by external force such as wind. In this case, accident due to collision may occur if a worker is within the rotational range of the side door 120.

### SUMMARY OF THE INVENTION

Accordingly, the present invention is directed to an opening angle regulating device of a side door for a heavy equipment that substantially obviates one or more problems due to limitations and disadvantages of the related art.

An object of the present invention is to provide an opening angle regulating device of a side door for a heavy equipment in which the side door is opened at a predetermined angle against a door frame and is automatically fixed to the door frame without separate manipulation to avoid damage of the side door and accident due to collision and facilitate opening and closure of the side door.

Another object of the present invention is to provide an opening angle regulating device of a side door for a heavy equipment in which the opening angle of the side door is easily regulated at a predetermined angle.

To achieve these objects and other advantages and in accordance with the purpose of the invention, as embodied and broadly described herein, an opening angle regulating device of a side door for a heavy equipment, which is provided between a door frame and the side door to regulate an opening angle of the side door, includes a rod whose one end is rotatably fixed onto the door frame, and a bracket fixed onto the side door, having a guide rail slidably fixed to the other end of the rod depending on opening and closure of the side door, the guide rail having a groove that fixes the other end of the rod if the side door is opened at a predetermined angle.

In another aspect of the present invention, an opening angle regulating device of a side door for a heavy equipment, which is provided between a door frame and the side door to regulate an opening angle of the side door, includes a rod whose one end is rotatably fixed onto the side door, and a bracket fixed onto the door frame, having a guide rail slidably fixed to the other end of the rod depending on opening and closure of the side door, the guide rail having a groove that fixes the other end of the rod if the side door is opened at a predetermined angle.

Preferably, the rod has a circular shaped cross-section or a polygonal shaped cross-section.

Preferably, the opening angle of the side door is regulated as the position of the groove is adjusted on the guide rail.

### BRIEF DESCRIPTION OF THE DRAWINGS

The above aspects and features of the present invention will be more apparent by describing certain embodiments of the present invention with reference to the accompanying drawings, in which:

FIG. 1 is a perspective view illustrating a related art opening angle regulating device of a side door for a heavy equipment;

FIG. 2 is a perspective view illustrating an opening angle regulating device of a side door for a heavy equipment according to the first embodiment of the present invention;

FIG. 3 is a perspective view illustrating the operation of an opening angle regulating device of a side door for a heavy equipment according to the first embodiment of the present invention;

FIG. 4 is a perspective view illustrating an opening angle regulating device of a side door for a heavy equipment according to the second embodiment of the present invention; and

FIG. 5 is a perspective view illustrating the operation of an opening angle regulating device of a side door for a heavy equipment according to the second embodiment of the present invention.

### DETAILED DESCRIPTION OF THE PREFERRED EMBODIMENTS

Reference will now be made in detail to the preferred embodiments of the present invention, examples of which are illustrated in the accompanying drawings. Wherever possible, the same reference numbers will be used throughout the drawings to refer to the same or like parts.

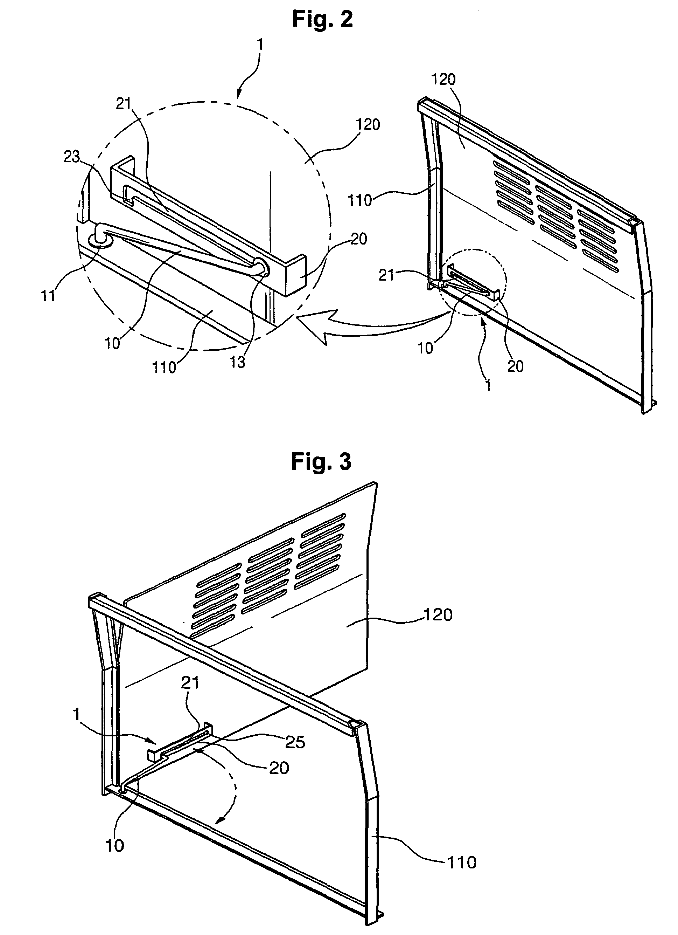

FIG. 2 is a perspective view illustrating an opening angle regulating device 1 of a side door for a heavy equipment according to the first embodiment of the present invention, and FIG. 3 is a perspective view illustrating the operation of the opening angle regulating device 1 of a side door for a heavy equipment according to the first embodiment of the present invention.

As shown in FIG. 2 and FIG. 3, the opening angle regulating device 1 is provided between a door frame 110 fixed to a vehicle body of a heavy equipment (not shown) in a single body and a side door 120 whose one side is hinged on the door frame 110. The opening angle regulating device 1 is to fix or regulate an opening angle of the side door 120 against the door frame 110. The opening angle regulating device 1 includes a rod 10 whose one end is rotatably fixed onto the door frame 110, and a bracket 20 fixed onto the side door 120, having a guide rail 21 slidably fixed to the other end of the rod 10 depending on opening and closure of the side door 120. The guide rail 21 is provided with a groove 23 that fixes the other end of the rod 10 if the side door 120 is opened at a predetermined angle.

The one end of the rod 10 is rotatably fixed to the lower side of the door frame 110 by a predetermined fitting member 11 and its other end is slidably fixed into the guide rail 21 of the bracket 20 by a predetermined guide member 13. In this structure, the one end of the rod 10 is rotated relative to a rotation angle of the side door 120 and the other end of the rod 10 is slid along the guide rail 21 if the side door 120 is rotated against the door frame 110 during opening and closure of the side door 120.

The rod 10 may have various shapes with a circular cross-section or a polygonal cross-section such as a rectangular cross-section and a hexagonal cross-section. The guide member 13 is slid under the guide of the guide rail 21 and prevents the other end of the rod 10 from being detached from the guide rail 21.

Various problems may occur as the side door 120 is rotated around one side of the door frame 110 but the rod 10 is rotated around one end spaced apart from one side of the door frame 110. Such problems may be solved by properly adjusting the length of the rod 10 and the position of one end of the rod 10. Particularly, it is preferable that the one end of the rod 10 is fixed to be adjacent to one side of the door frame 110 that acts as a rotational shaft of the side door 120, so as to enlarge a working area of a worker when the side door 120 is opened.

The other end of the rod 10 is slidably fixed onto the bracket 20. The bracket 20 is fixed to a lower side of the rear of the side door 120 by welding. The guide rail 21 is linearly formed on the bracket 20. The guide rail 21 guides the rod 10 so that the other end of the rod 10 may be slid depending on opening and closure of the side door 120.

The guide rail 21 determines the rotational range of the side door 120 against the door frame 110 by limiting the range that the other end of the rod 10 can be slid. Grooves 23 and 25 are formed on the guide rail 21. The groove 23 fixes the other end of the rod 10 if the side door 120 is opened at a predetermined angle while the groove 25 fixes the other end of the rod 10 if the side door 120 is closed. Such a structure of the guide rail 21 does not allow the side door 120 to be opened beyond a predetermined opening angle against the door frame 110.

Preferably, the groove 23 is rectangularly bent from the guide rail 21 so that the other end of the rod 10 may easily be detached from the groove 23 so as not to optionally close the side door 120. The groove 25 is preferably formed along the guide rail 221 to easily detach the other end of the rod 10 therefrom.

The position of the groove 23 is properly adjusted on the guide rail 21. Such positioning of the groove 23 varies the distance between the grooves 23 and 25, thereby regulating the opening angle of the side door 120. In other words, the groove 23 is positioned far away from the groove 25 if the opening angle of the side door 120 is regulated to be greater. On the other hand, the groove 23 is positioned closer to the groove 25 if the opening angle of the side door 120 is regulated to be smaller. Therefore, the opening angle of the side door 120 can easily be regulated.

Hereinafter, the operation of the opening angle regulating device 1 of the side door for the heavy equipment according to the first embodiment of the present invention will be described with reference to FIG. 2 and FIG. 3.

In a state that the side door 120 is closed, the other end of the rod 10 is positioned in the groove 25 of the guide rail 21. In this state, if the worker rotates the side door 120 in an opening direction, the other end of the rod 10 becomes away from the groove 25 and is slid along the guide rail 21 so that it may be fixed into the groove 23. As a result, the side door 120 is automatically opened at a predetermined angle.

To close the side door 120 again in a state that the side door 120 is opened, the side door 120 is rotated in a closure direction after the other end of the rod 10 fixed into the groove 23 is manually detached from the groove 23. If the worker rotates the side door 120 in a closure direction, the other end of the rod 10 detached from the groove 23 is slid in an opposite direction along the guide rail 21 and is positioned in the groove 25 at the time when the side door 120 is fully closed.

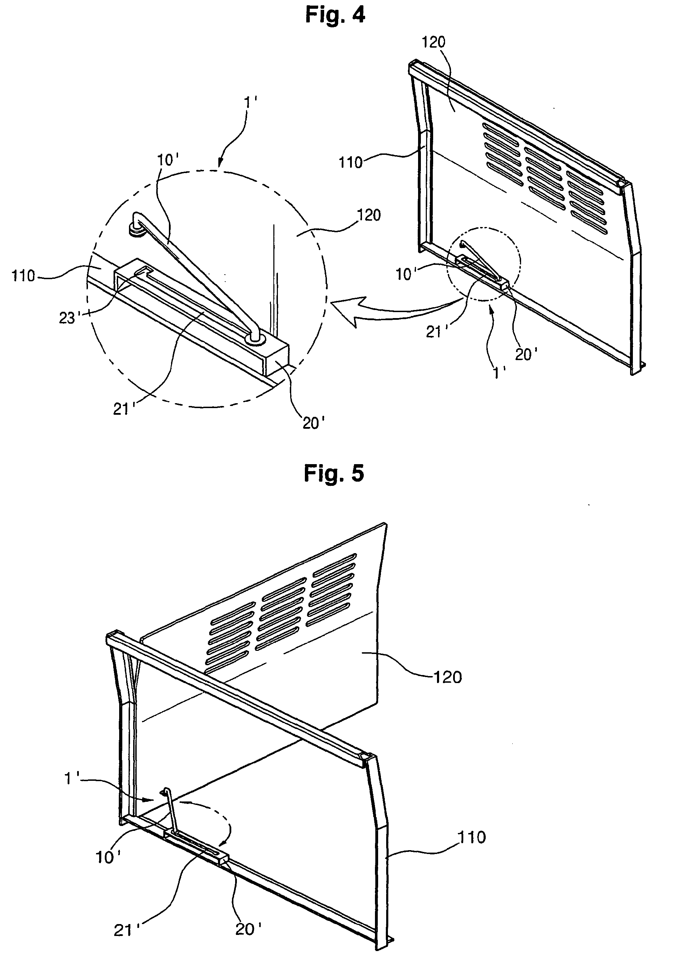

FIG. 4 is a perspective view illustrating an opening angle regulating device 1' of a side door for a heavy equipment according to the second embodiment of the present invention, and FIG. 5 is a perspective view illustrating the operation of the opening angle regulating device 1' of a side door for a heavy equipment according to the second embodiment of the present invention.

As shown in FIG. 4 and FIG. 5, the opening angle regulating device 1' is provided between a door frame 110 fixed to a vehicle body of a heavy equipment (not shown) in a single body and a side door 120 whose one side is hinged on the door frame 110. The opening angle regulating device 1' is to fix or regulate an opening angle of the side door 120 against the door frame 110. The opening angle regulating device 1' includes a rod 10' whose one end is rotatably fixed onto the door frame 110, and a bracket 20' fixed onto the door frame 110, having a guide rail 21' slidably fixed to the other end of the rod 10' depending on opening and closure of the side door 120. The guide rail 21' is provided with a groove 23' that fixes the other end of the rod 10' if the side door 120 is opened at a predetermined angle.

The rod 10' has various shapes with a circular cross-section or a polygonal cross-section such as a rectangular cross-section and a hexagonal cross-section. Preferably, the opening angle of the side door 120 is regulated as the position of the groove 23' is adjusted on the guide rail 21'.

The opening angle regulating device 1' of the second embodiment is different from the opening angle regulating device 1 of the first embodiment in that the rod 10' is fixed onto the side door 120 not the door frame 110 and the bracket 20' is fixed onto the door frame 110. Since the structure and the operation of the rod 10' and the bracket 20' are identical to those of the rod 10 and the bracket 20, their detailed description will be omitted.

As described above, the opening angle regulating device of the side door for the heavy equipment according to the present invention has the following advantages.

Since the opening angle of the side door is fixed against the door frame, collision with other elements does not occur, which may be caused by rotation beyond the necessary range when the side door is opened.

In addition, since the opening angle of the side door is automatically fixed against the door frame, a separate manipulation is not required when the opening angle of the side door is fixed, thereby leading to convenient use.

Finally, the opening angle of the side door is regulated by adjusting the position of the groove and the side door having the fixed opening angle is not closed forcibly due to external force such as wind as far as the other end of the rod is not detached from the groove. Therefore, it is possible to prevent damage of the elements or accident from occurring.

The foregoing embodiment and advantages are merely exemplary and are not to be construed as limiting the present invention. The present teaching can be readily applied to other types of apparatuses. Also, the description of the embodiments of the present invention is intended to be illustrative, and not to limit the scope of the claims, and many alternatives, modifications, and variations will be apparent to those skilled in the art.

## Claims

1. An opening angle regulating device of a side door for a heavy equipment, which is provided between a door frame and the side door to regulate an opening angle of the side door, comprising:
a rod whose one end is rotatably fixed onto the door frame; and
a bracket fixed onto the side door, having a guide rail slidably fixed to the other end of the rod depending on opening and closure of the side door, the guide rail having a groove that fixes the other end of the rod if the side door is opened at a predetermined angle.

2. An opening angle regulating device of a side door for a heavy equipment, which is provided between a door frame and the side door to regulate an opening angle of the side door, comprising:
a rod whose one end is rotatably fixed onto the side door; and
a bracket fixed onto the door frame, having a guide rail slidably fixed to the other end of the rod depending on opening and closure of the side door, the guide rail having a groove that fixes the other end of the rod if the side door is opened at a predetermined angle.

3. The opening angle regulating device according to claim 1, wherein the rod has a circular shaped cross-section or a polygonal shaped cross-section.

4. The opening angle regulating device according to claim 1, wherein the opening angle of the side door is regulated as the position of the groove is adjusted on the guide rail.

5. The opening angle regulating device according to claim 2, wherein the rod has a circular shaped cross-section or a polygonal shaped cross-section.

6. The opening angle regulating device according to claim 2, wherein the opening angle of the side door is regulated as the position of the groove is adjusted on the guide rail.
